# EUROPEAN PATENT SPECIFICATION

(11) **EP 4 533 170 B1**
(45) Date of publication and mention of the grant of the patent: **25.03.2026**
(21) Application number: 23731371.3
(22) Date of filing: 24.05.2023
(51) Int. Cl.: G02C 5/22, G02C 11/00

(54) **HINGE ASSEMBLY FOR GLASSES AND GLASSES COMPRISING SUCH A HINGE ASSEMBLY**
SCHARNIERANORDNUNG FÜR BRILLEN UND BRILLE MIT SOLCH EINER SCHARNIERANORDNUNG
ENSEMBLE CHARNIÈRE POUR LUNETTES ET LUNETTES COMPRENANT UN TEL ENSEMBLE CHARNIÈRE

(30) Priority: 25.05.2022 IT 202200010934
(43) Date of publication of application: 09.04.2025
(73) Proprietor: Luxottica S.r.l., 32021 Agordo (BL) (IT)
(72) Inventor: DAL PONT, Moreno, 32100 Belluno (BL) (IT)
(74) Representative: Biallo, Dario
(86) International application number: PCT/IB2023/055320
(87) International publication number: WO 2023/228096

(56) References cited:
- EP-A1- 3 428 714
- WO-A1-2021/130666
- DE-B3- 102020 210 683
- DE-U1- 9 002 858
- US-A1- 2021 255 481

## Description

The present invention relates to a hinge assembly for glasses particularly but not exclusively employable in "smart" glasses.

The present invention also relates to glasses comprising such a hinge assembly.

Although such a hinge assembly can be used in all types of glasses, for ease of discussion, for exemplary and not limiting purposes, the focus will be only on "smart" glasses.

As known, "smart" glasses, also referred to as intelligent glasses or virtual glasses or digital glasses, mean a pair of glasses comprising electronical devices adapted to operate as a computer able to provide support to the activities performed by the user wearing them, both in the daily and private field and in the working and business field, or in any other particular field.

Currently used "smart" glasses allow to display required information and/or objects on the lenses or to use voice commands to interact with the glasses themselves, so as to save time and financial cost on many operations, and further allow the user to work more safely, having both hands free.

In more detail, "smart" glasses currently available on the market are composed by electronic devices and software able to play video or audio, film, operate computer applications, recognize the natural language, the shapes and the objects arranged in the surrounding environment.

"Smart" glasses are provided with a displaying device, such as for example a display, typically integrated in the lenses of the frame for glasses or arranged thereon, and an electronic processing and control unit, such as for example a controller or a battery, usually integrated in the frame for glasses or in the temples thereof.

Thereby, it is necessary to electrically connect the front of the frame for glasses, where the lenses are arranged, to the electronic components located on the temple of the frame itself. "Smart" glasses are generally provided with a common hinge and a cable passing therein. In common hinges, however, during the rotation of the temples with respect to the frame for glasses to pass from an opening operating position to a closing one, the cable can excessively bend and deteriorate or even break under stress exerted by the hinge itself or change its shape and/or size in addition to the limits of its elasticity.

As known, "smart" glasses provided with a bistable hinge are present on the market.

The bistability of the hinge allows to keep the temple of the frame for glasses stationary and stable in the operating position in which it is, that is opening or closing, preventing it from moving accidentally and without the user's will, causing discomfort to the latter.

For example, document DE102020210683B3 discloses a bistable hinge of a frame for glasses made of a first joint region configured to connect the hinge to the front of the frame for glasses and detect a first joint axis, and of a second joint region configured to connect the hinge to the temple of the frame for glasses and detect a second joint axis, and having a recess, perpendicular to the first and second joint axes, acting as a guide to accommodate a cable connecting the front to the temple of the frame for glasses.

However, such hinges do not allow to reach a further flexible extra-opening operating position, referred to as "extra-flex" operating position, wherein the angle formed between the temple and the front of the frame for glasses is greater than 90 degrees when the temples are open.

The "extra-flex" operating position allows an easier wearing operation by the user just because of the flexible extra-opening of the temples, and a greater comfort when the user wears such glasses.

Hinges which provide the reaching of the "extra-flex" operating position will be referred to as flexible below.

A bistable and flexible hinge would also allow to accommodate a flexible cable therein for data communication and/or electrical power between front and temple, preventing it from damaging or breaking under stress of the hinge itself when the frame for glasses passes from an opening operating configuration to a closing one or an "extra-flex" one, or vice versa.

An object of the present invention is to overcome the above-mentioned drawbacks and in particular to devise a hinge assembly for glasses, which is bistable, and which is simultaneously "extra-flex."

Another object of the present invention consists in devising a bistable and simultaneously "extra-flex" hinge which allows to accommodate a flexible cable therein, preventing the excessive stress exerted by the hinge on the cable itself from damaging or breaking it.

These and other objects according to the present invention are achieved by making a hinge assembly for glasses as set forth in claim 1.

Further features of the hinge assembly for glasses are object of the dependent claims.

The features and advantages of a hinge assembly for glasses according to the present invention will be more evident from the following exemplary and nonlimiting description referred to the attached schematic drawings, in which:

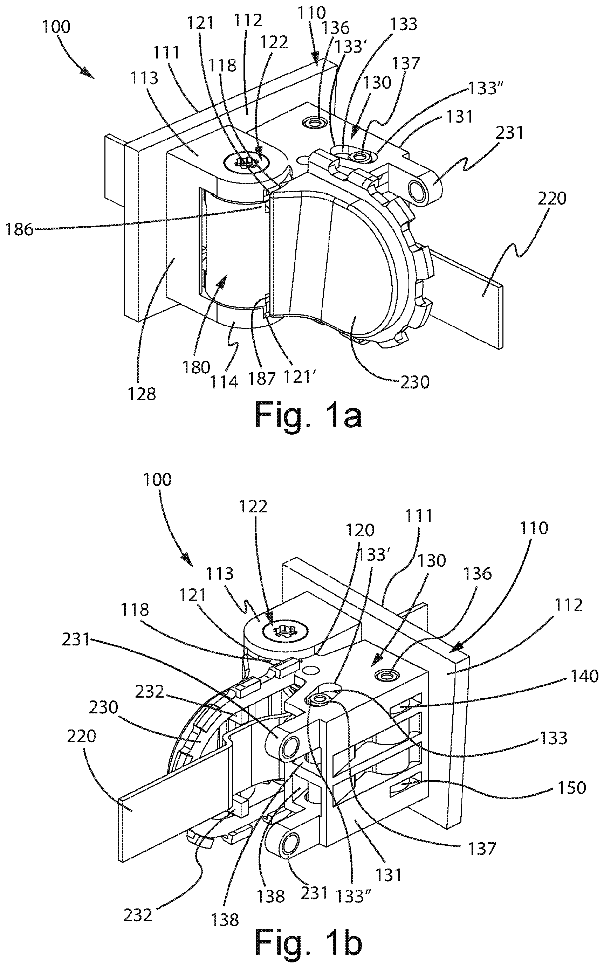

- figure 1a is a first perspective view of a hinge assembly for glasses according to the present invention when it is in a first stable opening position;
- figure 1b is a second perspective view of the hinge assembly for glasses of figure 1a;

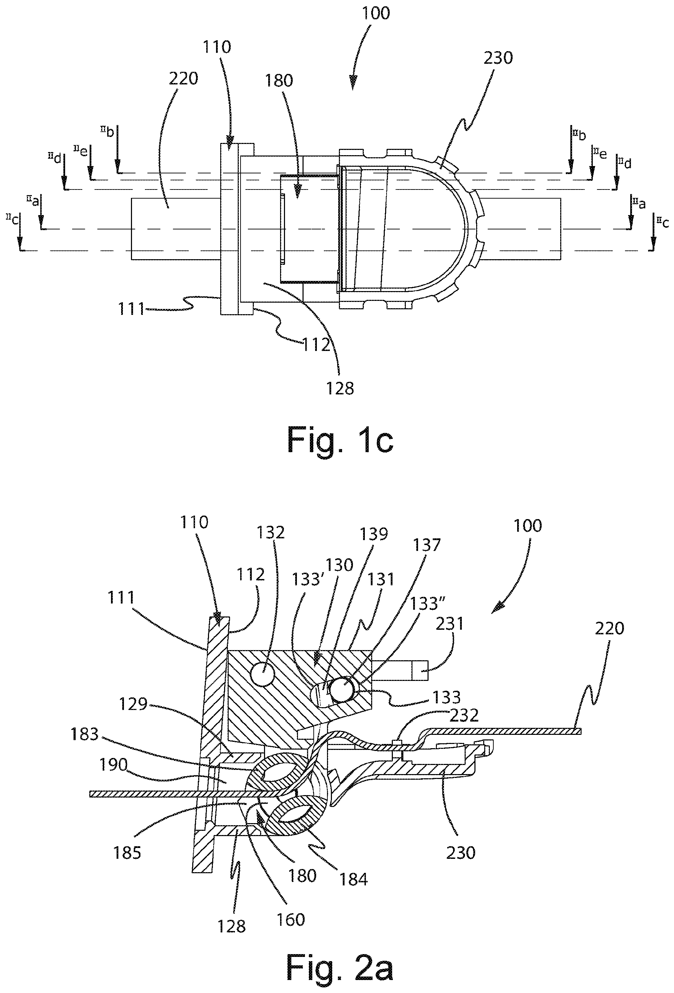

- figure 1c is a first front view, taken from the space interposed between the temple and the front of the glasses, of the hinge assembly for glasses of figure 1a;

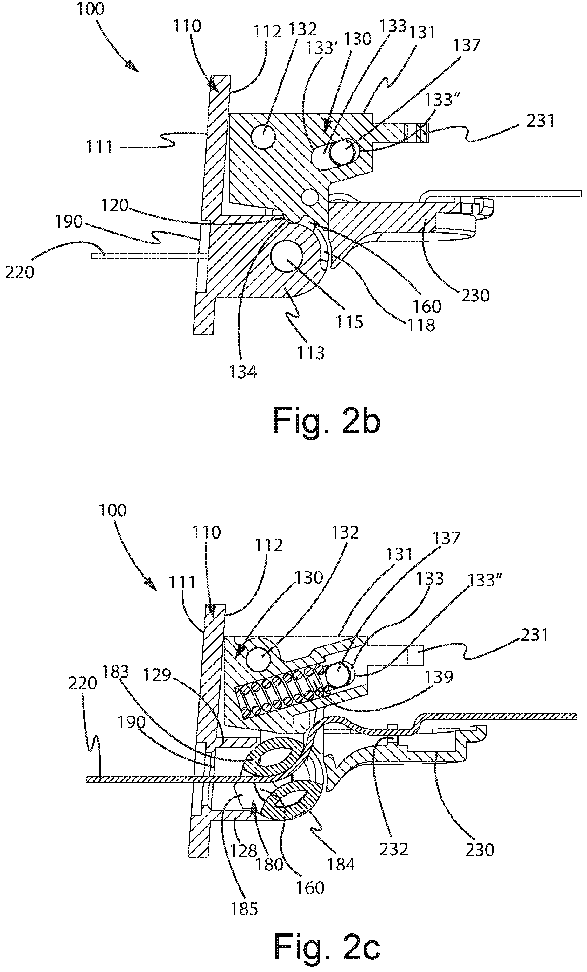

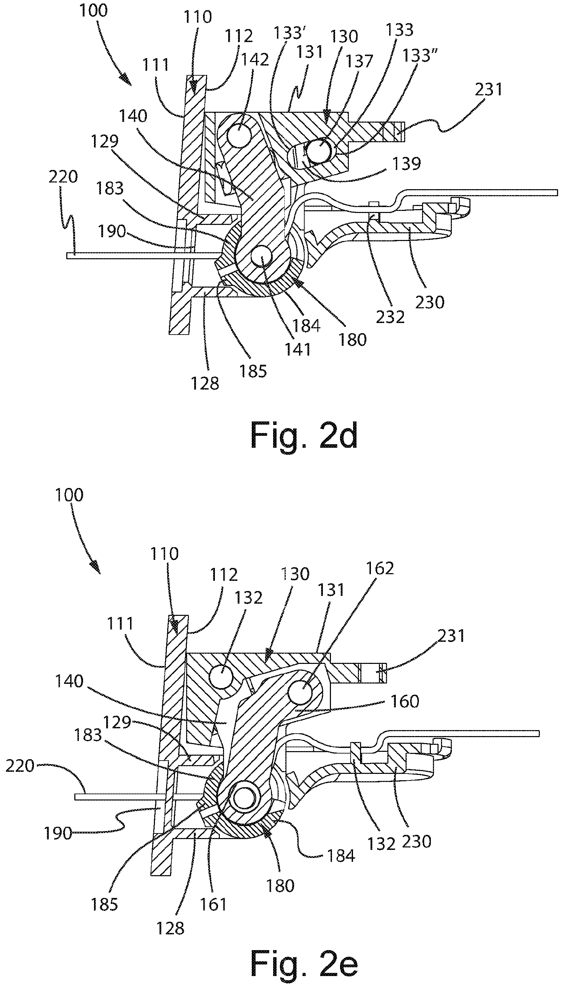

- figures 2a, 2b, 2c, 2d, 2e are five sectional views respectively along the lines IIa-IIa, IIb-IIb, IIc-IIc, IId-IId, IIe-IIe of the hinge assembly for glasses of figure 1c;

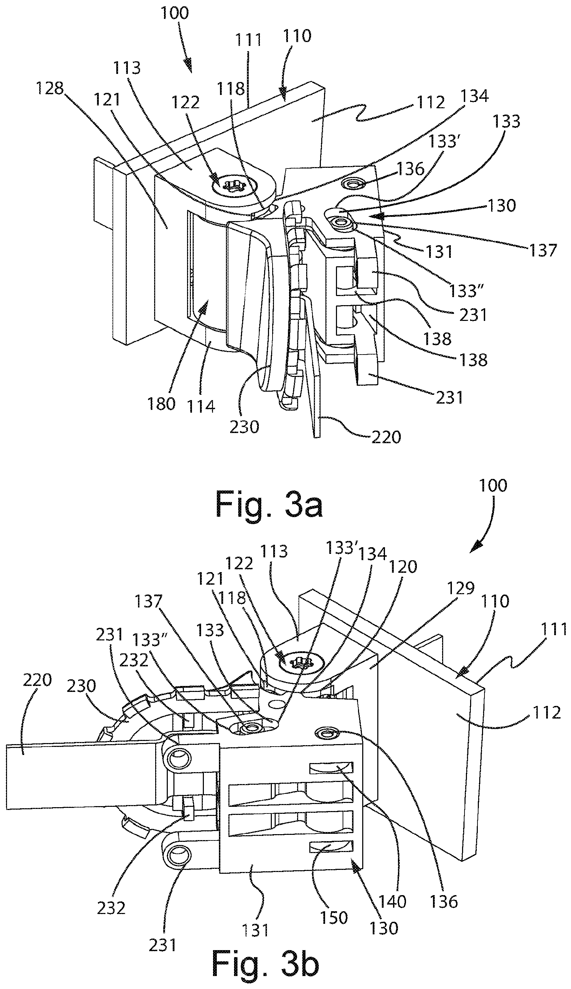

- figure 3a is a third perspective view of the hinge assembly for glasses according to the present invention when it is in an intermediate position between the first stable opening position and a second stable closing position;
- figure 3b is a fourth perspective view of the hinge assembly for glasses of figure 3a;

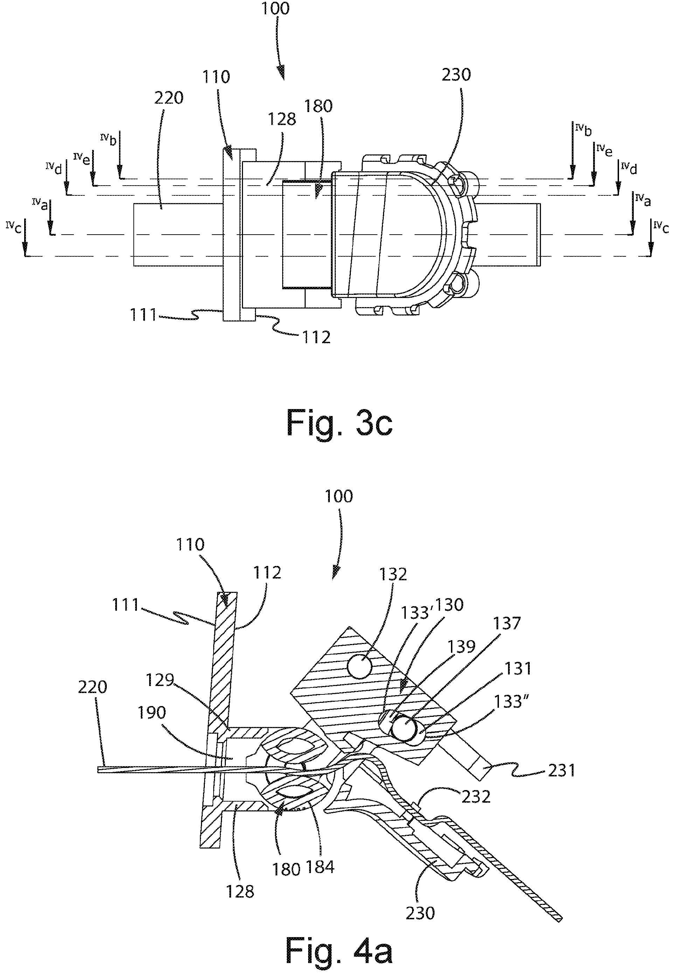

- figure 3c is a second front view, taken from the space interposed between the temple and the front, of the hinge assembly for glasses of figure 3a;

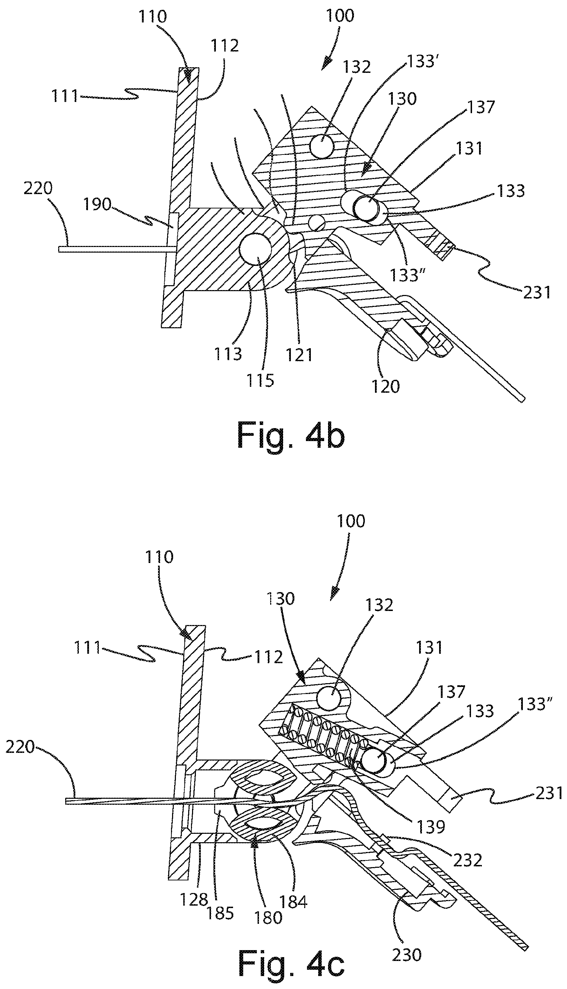

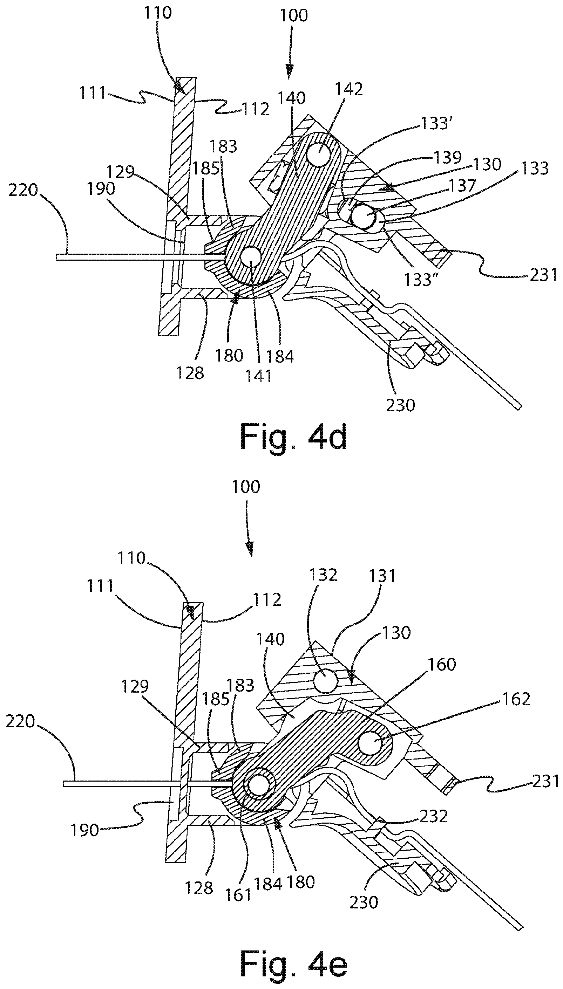

- figures 4a, 4b, 4c, 4d, 4e are five sectional views respectively along the lines IVa-IVa, IVb-IVb, IVc-IVc, IVd-IVd, IVe-IVe of the hinge assembly for glasses of figure 3c;

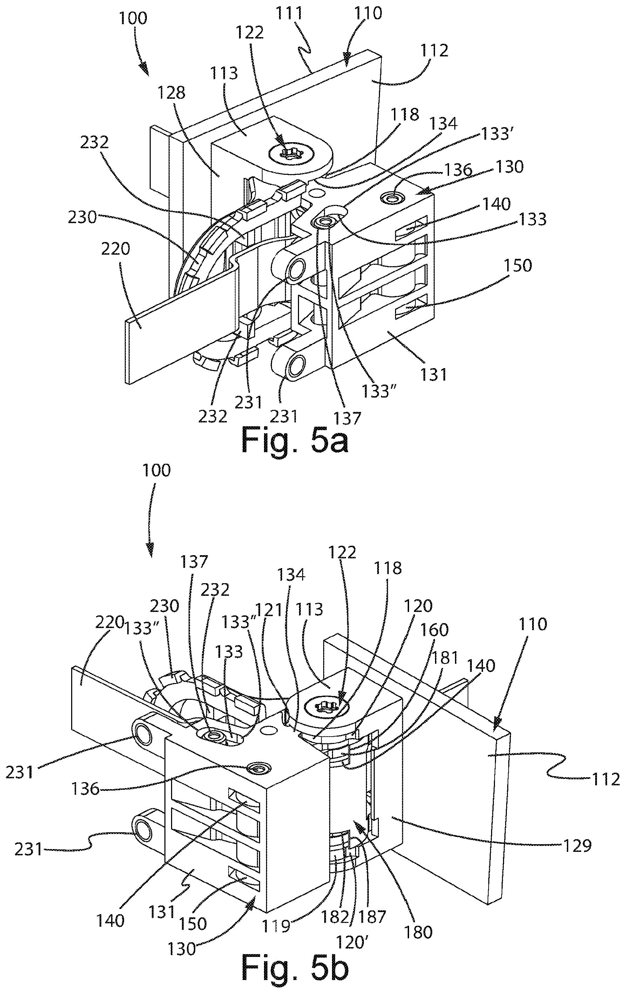

- figure 5a is a fifth perspective view of the hinge assembly for glasses according to the present invention when it is in the second stable closing position;
- figure 5b is a sixth perspective view of the hinge assembly for glasses of figure 5a;

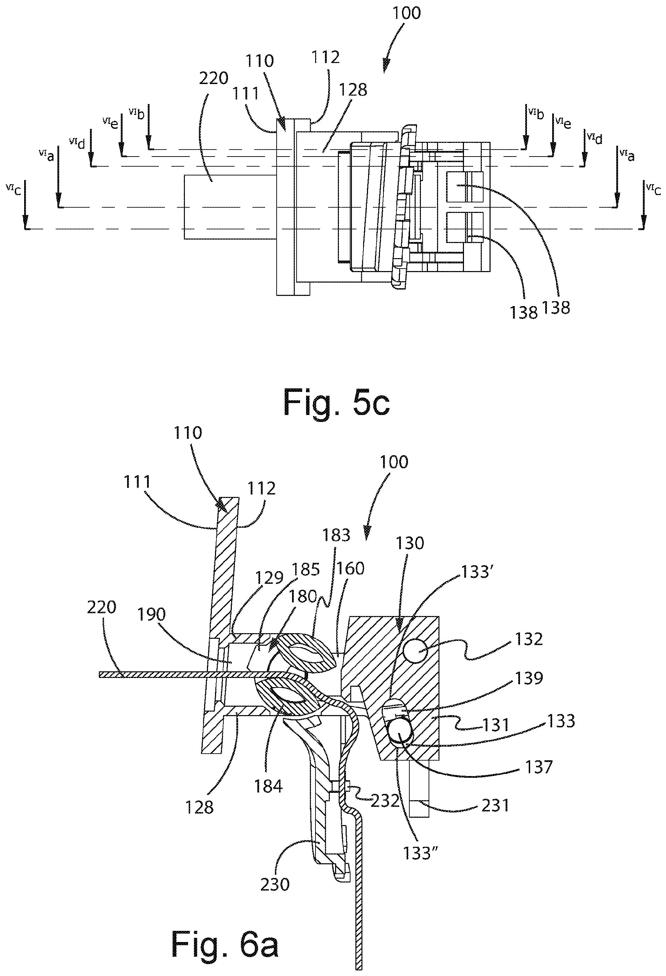

- figure 5c is a third front view, taken from the space interposed between the temple and the front, of the hinge assembly for glasses of figure 5a;

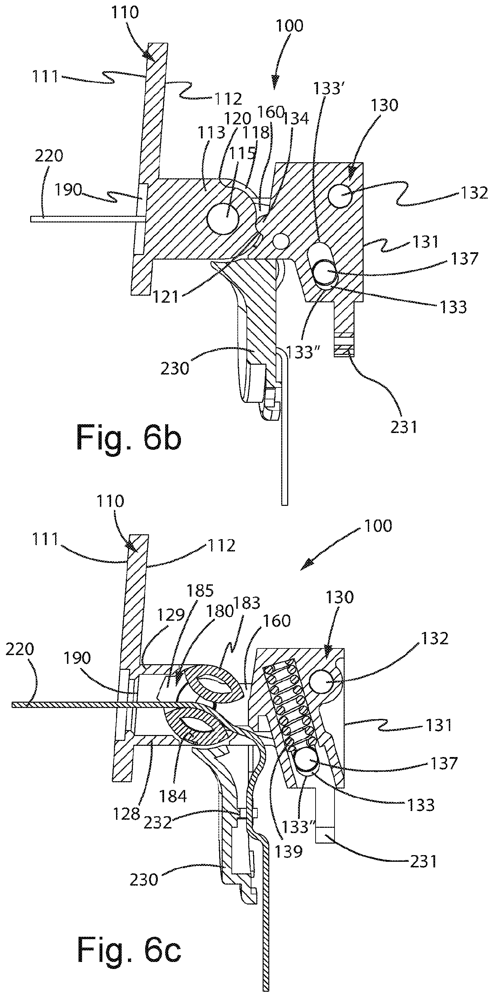

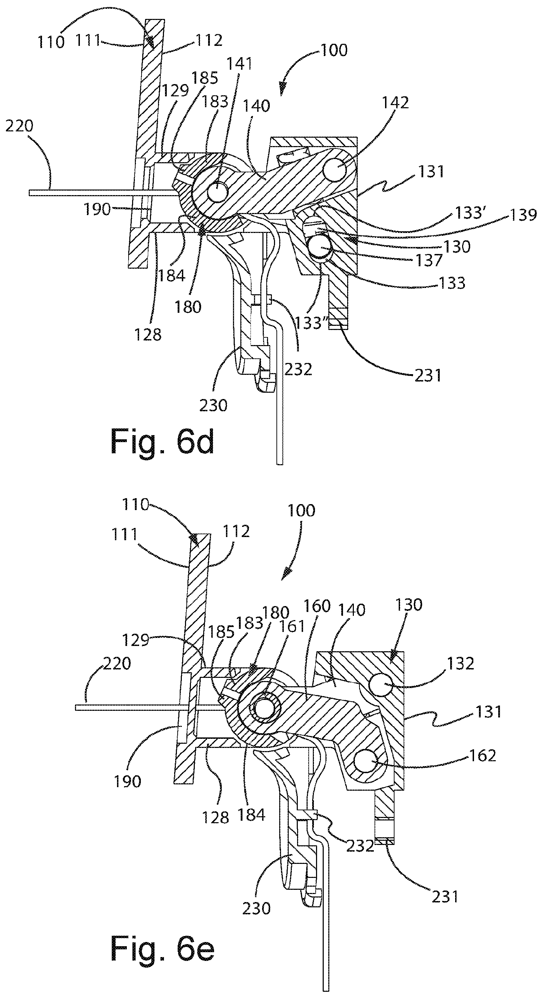

- figures 6a, 6b, 6c, 6d, 6e are five sectional views respectively along the lines VIa-VIa, VIb-VIb, VIc-VIc, VId-VId, VIe-VIe of the hinge assembly for glasses of figure 5c;

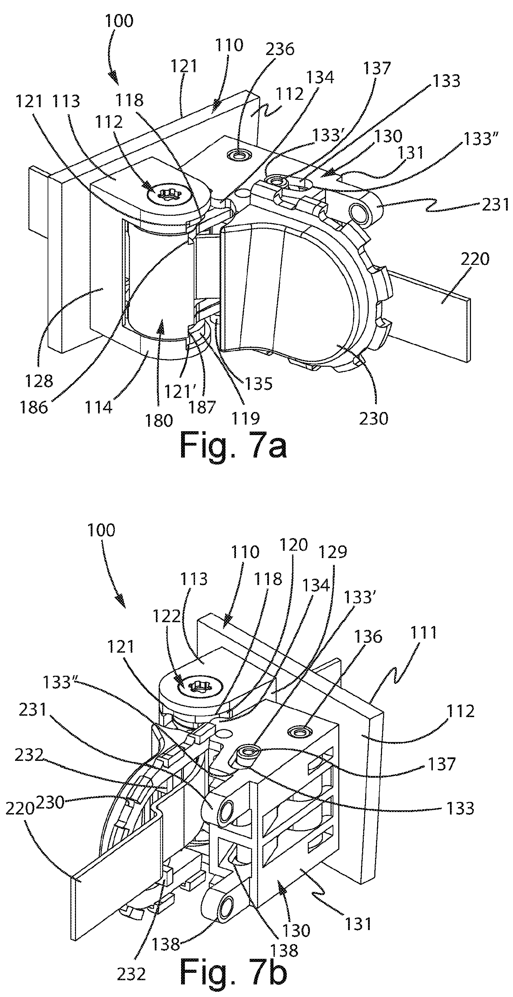

- figure 7a is a seventh perspective view of the hinge assembly for glasses according to the present invention when it is in a third unstable extra-opening position;
- figure 7b is an eighth perspective view of the hinge assembly for glasses of figure 7a;

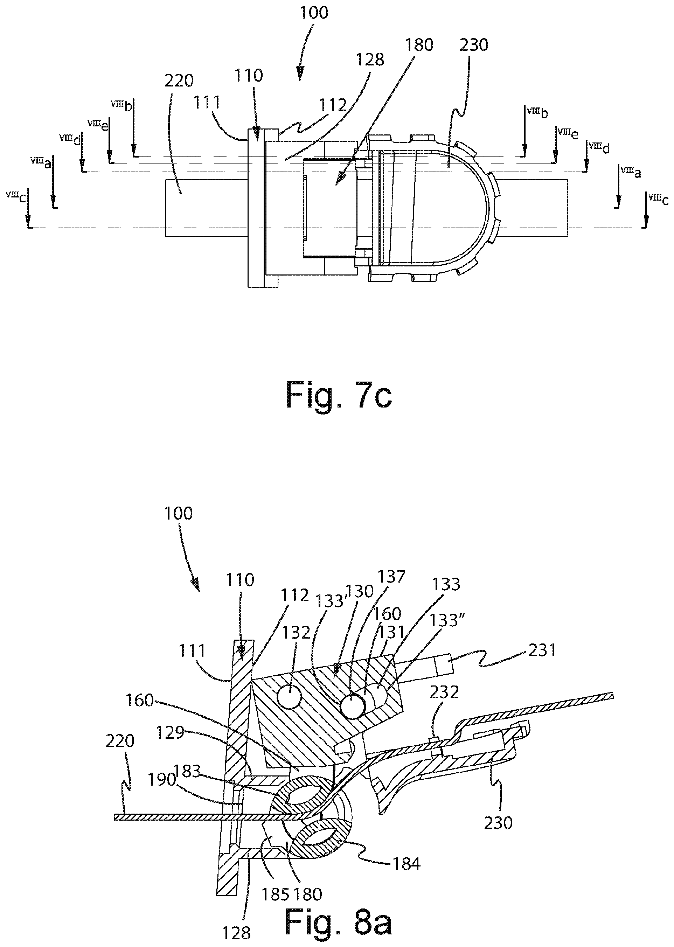

- figure 7c is a fourth front view, taken from the space interposed between the temple and the front, of the hinge assembly for glasses of figure 7a;

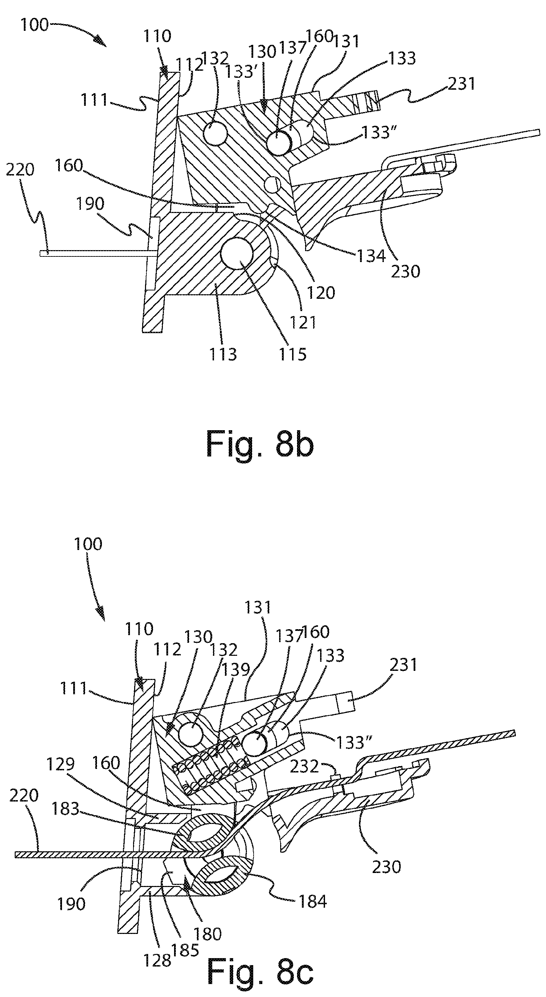

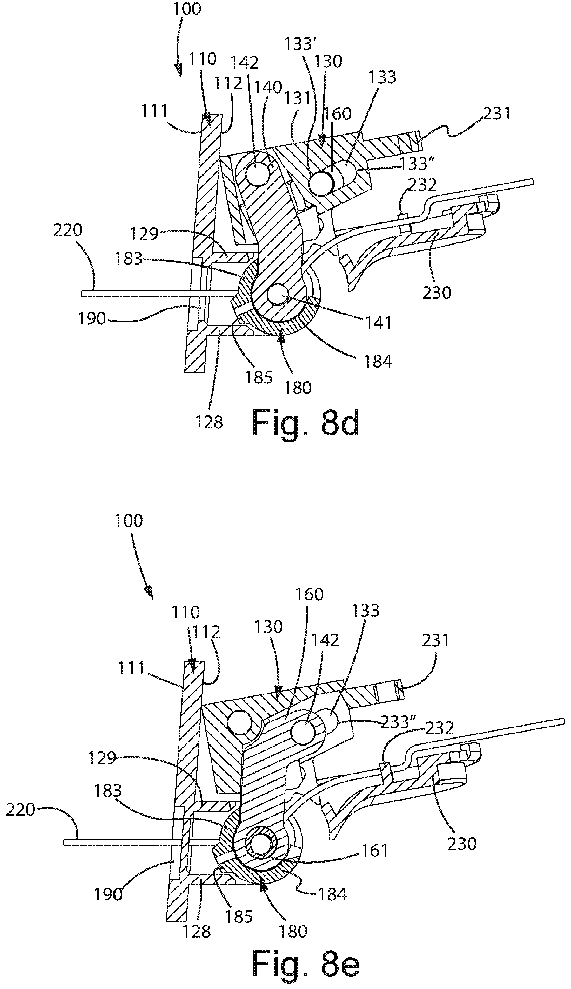

- figures 8a, 8b, 8c, 8d, 8e are five sectional views respectively along the lines VIIIa-VIIIa, VIIIb-VIIIb, VIIIc-VIIIc, VIIId-VIIId, VIIIe-VIIIe of the hinge assembly for glasses of figure 7c;
- figure 9 is a ninth exploded perspective view of the hinge assembly for glasses according to the present invention;

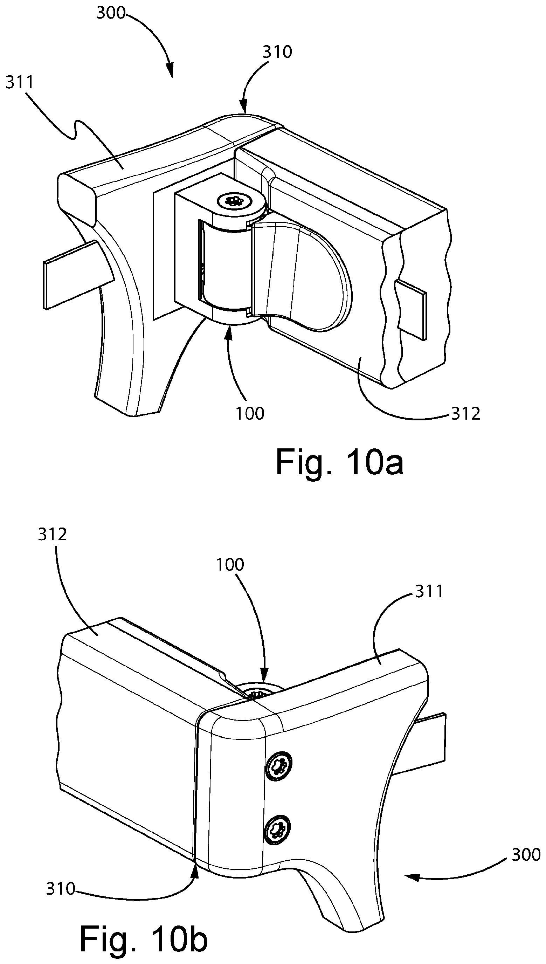

- figures 10a and 10b are two partial perspective schematic views of glasses according to the present invention.

With reference to the attached figures, a hinge assembly for glasses overall denoted by 100 is shown. The hinge assembly for glasses 100 can be advantageously mounted in a pair of glasses 300. Such glasses 300 comprise a frame 310 comprising in turn a front 311 adapted to carry two lenses and two temples 312 adapted to allow a user to wear glasses 300, two hinge assemblies for glasses 100 each of which couples a respective temple 312 to the front 311.

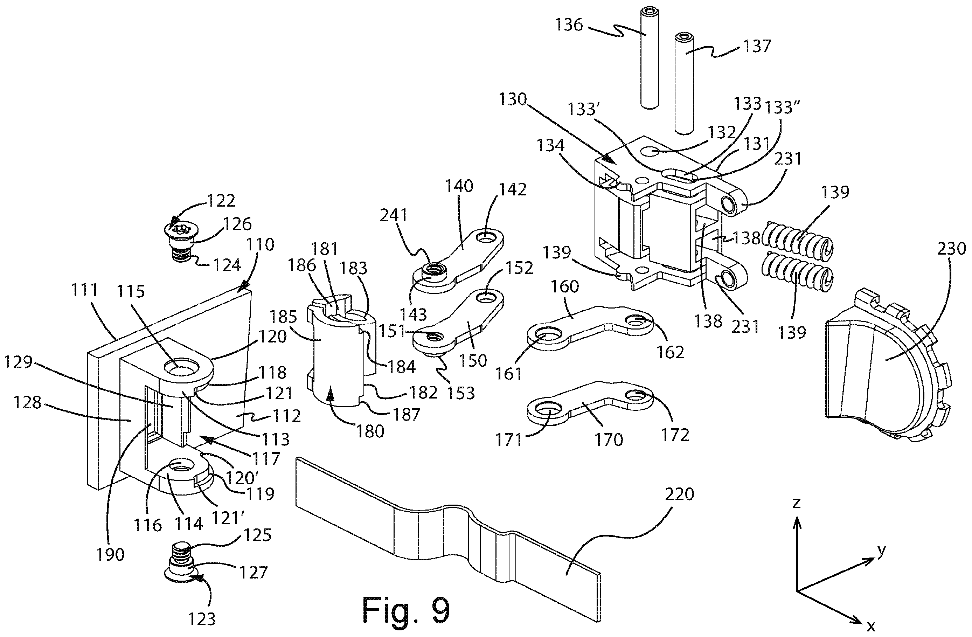

In a particular embodiment, the glasses 300 are of the "smart" type. In such case, the glasses 300 also comprise an electrical cable 220, preferably flexible, adapted to electrically connect electric and/or electronic devices to each other that are installed in the front 311 and in the temples 312. In the present disclosure, reference will be made for simplicity and clarity of exposition to a Cartesian axis system xyz depicted in figures comprising a transverse axis x, a longitudinal axis y and a vertical axis z and to an orientation of the hinge assembly for glasses 100 like that illustrated in figure 9.

The hinge assembly for glasses 100 comprises a support plate 110 provided with a first face 111 substantially flat and a second face 112 substantially flat opposite and parallel to the first. In particular the first face 111 is intended to be applied to a front 311 of the frame 310. Furthermore, the support plate 110 comprises a first cantilevered portion 113 and a second cantilevered portion 114 parallel and opposite to each other extending from the second face 112 in a direction substantially perpendicular to it, i.e., in a direction substantially parallel to the transverse axis x. In more detail, the cantilevered portions 113, 114 have a first through hole 115 and a second through hole 116 opposite and aligned with each other along a direction substantially parallel to the vertical axis z.

The two cantilevered portions 113, 114 detect a free space between them which makes a receiving seat 117. The hinge assembly for glasses 100 also comprises a support body 130 intended to be applied to the temple 312. In particular, the support body 130 has a box shape and a first face 131 substantially flat intended to be fixed to the temple 312.

Advantageously, the support body 130 is rotatably coupled to the support plate 110 such that the hinge assembly for glasses 100 is able to take a first stable opening position, corresponding to the position where the temples 312 of the glasses 300 are open and the glasses 300 can be worn, a second stable closing position corresponding to the position where the temples 312 of the glasses 300 are closed and the glasses 300 cannot be worn, and a third unstable extra-opening position where the temples 312 are open beyond the first stable opening position.

The support body 130 comprises a third through hole 132 and a slotted through hole 133. The third through hole 132 and the slotted through hole 133 have axes parallel to each other and substantially parallel to the vertical axes z.

Advantageously, the support body 130 and the support plate 110 comprise respective interaction elements 118, 119, 134, 135 adapted to guide the rotation of the support body 130 with respect to the support plate 110 between the first stable opening position and the second stable closing position.

Preferably, the interaction elements 118, 119, 134, 135 comprise a first guide groove 118 made on the first cantilevered portion 113 and a second guide groove 119 made on the second cantilevered portion 114 describing an arc of circumference.

Each of such guide grooves 118, 119 comprises respectively a first endstroke abutment 120, 120' and a second endstroke abutment 121, 121'.

Preferably, the guide grooves 118, 119 are comparable to cams and are arranged at perimeter ends of the cantilevered portions 113, 114 respectively around the first through hole 115 and the second through hole 116.

The interaction elements 118, 119, 134, 135 also comprise a first protrusion 134 and a second protrusion 135, comparable to stop rolls, made on said support body 130 resting respectively in the first guide groove 118 and in the second guide groove 119 and are adapted to slide in them between the first endstroke abutment 120, 120' and the second endstroke abutment 121, 121' when the support body 130 rotates with respect to the support plate 110 around an axis passing through the first through hole 115 and the second through hole 116 of the cantilevered portions 113, 114.

In more detail, when the hinge assembly for glasses 100 is in the first stable opening position, the first protrusion 134 and the second protrusion 135 are both in contact and in abutment with the first endstroke abutments 120, 120' of the first guide groove 118 and of the second guide groove 119 respectively; when the hinge assembly for glasses 100 is in the second stable closing position, the first protrusion 134 and the second protrusion 135 are both in contact and in abutment with the second endstroke abutments 121, 121' of the first guide groove 118 and of the second guide groove 119 respectively.

When the hinge assembly for glasses 100 passes from the first stable opening position to the second stable closing position, the first protrusion 134 and the second protrusion 135 slide respectively along the first guide groove 118 and the second guide groove 119 from the first endstroke abutments 120, 120' to the second endstroke abutments 121, 121'; during such step, the support body 130 makes a first rotary movement around the axis passing through the first through hole 115 and the second through hole 116 of the cantilevered portions 113, 114 of the support plate 110 quantifiable with a determined first angular excursion.

Vice versa, when the hinge assembly for glasses 100 passes from the second stable closing position to the first stable opening position, the first protrusion 134 and the second protrusion 135 slide respectively along the first guide groove 118 and the second guide groove 119 from the second endstroke abutments 121, 121' to the first endstroke abutments 120, 120'; during such step, the support body 130 makes a second rotary movement around the axis passing through the first through hole 115 and the second through hole 116 of the cantilevered portions 113, 114 of the support plate 110 in opposite direction with respect to that previously described and quantifiable with a determined second angular excursion equal and opposite to the first angular excursion of the first rotary movement.

The hinge assembly for glasses 100 also comprises a first arm element 140 and a second arm element 150. The first arm element 140 and the second arm element 150 respectively have first perforated end portions 141, 151 and second perforated end portions 142, 152. The first perforated end portion 141 of the first arm element 140 is arranged at the first through hole 115 of the first cantilevered portion 113. The first perforated end portion 151 of the second arm element 150 is arranged at the second through hole 116 of the second cantilevered portion 114.

The hinge assembly for glasses 100 also comprises a first coupling element 122 and a second coupling element 123 at least partially crossing respectively the first through hole 115 and the second through hole 116 of the cantilevered portions 113, 114 of the support plate 110 and are coupled with the first perforated end portions 141, 151 of the first arm element 140 and of the second arm element 150.

Preferably, the first perforated end portions 141, 151 have threaded holes.

In such case the first coupling element 122 and the second coupling element 123 have corresponding threaded ends 124, 125 adapted to couple with the threaded holes of the first perforated end portions 141, 151.

The first coupling element 122 and the second coupling element 123 further have respective cylindrical portions 126, 127 adapted to allow the rotation of the coupling elements 122, 123 within the first through hole 115 and the second through hole 116.

The first coupling element 122 and the second coupling element 123 are for example made in a screw shape having the threaded terminal portion of the stem and an intermediate non-threaded cylindrical portion.

The second perforated end portions 142, 152 of the first arm element 140 and of the second arm element 150 are housed in the support body 130 so as to be coaxial with respect to the third through hole 132.

The hinge assembly for glasses 100 further comprises a first coupling pin 136 crossing the third through hole 132 of the support body 130 and the second perforated end portions 142, 152 of the first arm element 140 and of the second arm element 150.

The second perforated end portions 142, 152 are free to rotate with respect to the first coupling pin 136. The hinge assembly for glasses 100 also comprises a third arm element 160 and a fourth arm element 170. The third arm element 160 and the fourth arm element 170 respectively have third perforated end portions 161, 171 and fourth perforated end portions 162, 172. The third perforated end portions 161, 171 are rotatably coupled respectively to the first perforated end portions 141, 151 of the first arm element 140 and of the second arm element 150. Preferably, the first perforated end portions 141, 151 have around their hole cylindrical delimitation walls 143, 153 that protrude for a section of length beyond the surface of such portions respectively towards the first cantilevered portion 113 and the second cantilevered portion 114; in such case, the third perforated end portions 161, 171 are placed on the first perforated end portions 141, 151 such that the respective holes are coaxial and the cylindrical delimitation walls 143, 153 penetrate the respective holes of the third perforated end portions 161, 171. Thereby, the third arm element 160 is free to rotate with respect to the first arm element 140 around the axis of the holes of the first perforated end portion 141 of the first arm element 140 and of the third perforated end portion 161 of the third arm element 160; similarly, the fourth arm element 170 is free to rotate with respect to the second arm element 150 around the axis of the holes of the first perforated end portion 151 of the second arm element 150 and of the third perforated end portion 171 of the fourth arm element 170.

The fourth perforated end portions 162, 172 of the third arm element 160 and of the fourth arm element 170 are housed in the support body 130 at the slotted through hole 133.

Furthermore, the hinge assembly for glasses 100 comprises a second coupling pin 137 crossing the slotted through hole 133 of the support body 130 and the fourth perforated end portions 162, 172 respectively of the third arm element 160 and of the fourth arm element 170. The fourth perforated end portions 162, 172 are free to rotate with respect to the second coupling pin 137.

The first coupling pin 136 allows the rotation of the support body 130, while the second coupling pin 137 controls the translation and thus the opening of the temple 312 in the third unstable extra-opening position.

The support body 130 further comprises at least one housing chamber 138 open toward the outside and in communication with the slotted through hole 133.

Preferably, the at least one housing chamber 138 can be more than one. In a particular embodiment, the support body 130 comprises two of said housing chambers 138, parallel to each other and arranged successively along the vertical axis z.

The hinge assembly for glasses 100 also comprises at least one elastic element 139 housed in the at least one housing chamber 138. In more detail, the at least one elastic element 139 is in contact with a bottom wall of the at least one housing chamber 138 on one side and in contact with the second coupling pin 137 on the other side.

Preferably, the at least one elastic element 139 can be more than one and in particular can be in number equal to the number of the housing chambers 138. In a particular embodiment, for example that illustrated in the attached figures, the at least one elastic element 139 are two springs, each housed in the respective housing chamber 138.

When the hinge assembly for glasses 100 is in the first stable opening position, it is possible to pass to the third unstable extra-opening position, pushing in rotation the support body 130 in opposite direction to what would be made to reach the second stable closing position. Thereby, indeed, the support body 130 abuts on the second face 112 of the support plate 110. Forcing the rotation of the support body 130, the support body 130 is forced to rotate around an axis passing through the third through hole 132 and no longer for the axis passing through the first through hole 115 and the second through hole 116. In such case, the first protrusion 134 and the second protrusion 135 pass from a condition corresponding to the first stable opening position wherein they are in contact with the first endstroke abutments 120, 120', to a condition corresponding to the third unstable extra-opening position wherein they are not in contact and are respectively outside the first guide groove 118 and the second guide groove 119.

Still in the transition from the first stable opening position to the third unstable extra-opening position, the second coupling pin 137 slides in the slotted through hole 133 to a first endstroke end 133' defining the third unstable extra-opening position. Thereby, the second coupling pin 137 compresses the at least one elastic element 139 housed in the at least one housing chamber 138; so, once released the support body 130, the hinge assembly for glasses 100 returns from the third unstable extra-opening position to the first stable opening position because of the elastic return force of the at least one elastic element 139 which, by lengthening, pushes the second coupling pin 137 sliding the latter in the slotted through hole 133 towards a second endstroke end 133" opposite to the first 133'.

In the particular embodiment in which the glasses 300 are of the "smart" type the hinge assembly for glasses 100 also comprises a masking and guide body 180 for the electrical cable 220 extending along the axis z between a first end 181 and a second end 182. Such masking and guide body 180 for the electrical cable 220 is interposed between the two cantilevered portions 113, 114 in the receiving seat 117 such that the first end 181 faces the first cantilevered portion 113 and the second end 182 faces the second cantilevered portion 114.

In such case, the first perforated end portion 141 of the first arm element 140 is interposed between the first end 181 of the masking and guide body 180 for the electrical cable 220 and the first cantilevered portion 113. The first perforated end portion 151 of the second arm element 150 is interposed between the second end 182 of the masking and guide body 180 for the electrical cable 220 and the second cantilevered portion 114.

Preferably the masking and guide body 180 for the electrical cable 220 comprises a first rest portion 183 and a second rest portion 184 spaced from each other extending in length between the first end 181 and the second end 182, and at least one bridge element 185 connecting such rest portions 183, 184 to each other. Thus, the two rest portions 183, 184 face each other and define a free gap between them.

Preferably, the rest portions 183, 184 have two perimeter stop walls 186, 187 that protrude along a direction substantially parallel to the vertical axis z beyond the first end 181 and the second end 182 making two housing seats for the first perforated end portions 141, 151.

The masking and guide body 180 for the electrical cable 220 cannot escape the receiving seat 117 as its movement in the vertical direction z is limited by the presence of the first perforated end portions 141, 151 and the third perforated end portions 161, 171, in the transverse plane xy its movement is limited by the interference between the perimeter stop walls 186, 187 and the respective first perforated end portions 141, 151 and third perforated end portions 161, 171.

The masking and guide body 180 for the electrical cable 220 is instead free to rotate around the axis passing through the first through hole 115 and the second through hole 116.

Preferably, the support plate 110 comprises two side walls 128, 129 connecting the first cantilevered portion 113 to the second cantilevered portion 114. Preferably, the support plate 110 also comprises an opening 190 positioned along the vertical direction z between the first cantilevered portion 113 and the second cantilevered portion 114 and along the longitudinal direction y between the two side walls 128, 129.

The hinge assembly for glasses 100 further comprises a cover element 230 which can be coupled to the support body 130 or made in a single piece with such support body 130. In any case, the cover element 230 is integral with the support body 130.

Advantageously, the support body 130 comprises at least one anchoring protrusion 231 adapted to be fixed to the temple 312 of the glasses 300. In detail, the temple 312 is interposed between the at least one anchoring protrusion 231 of the support body 130 and the cover element 230.

In detail, the electrical cable 220 coming from the front 311 of the glasses 300 crosses the opening 190 of the support plate 110 and the gap between the rest portions 183, 184 engaging to engaging portions 232 of the cover element 230.

When the hinge assembly for glasses 100 is in the first stable opening position, the at least one bridge element 185 of the masking and guide body 180 for the electrical cable 220 is in contact and in abutment with the first side wall 128 of the support plate 110; furthermore, the electrical cable 220 is in contact and in abutment with a surface of the first rest portion 183 of the masking and guide body 180 for the electrical cable 220.

When the hinge assembly for glasses 100 is in the second stable closing position, the at least one bridge element 185 of the masking and guide body 180 for the electrical cable 220 is in contact and in abutment with the second side wall 129 of the support plate 110; furthermore, the electrical cable 220 is in contact and in abutment with a surface of the second rest portion 184 of the masking and guide body 180 for the electrical cable 220.

When the hinge assembly for glasses 100 passes from the first stable opening position to the second stable closing position, the electrical cable 220 is drawn in rotation by the cover element 230 which leads it to detach from the first rest portion 183 until contacting the second rest portion 184. At this point, the electrical cable 220 draws in rotation the masking and guide body 180 for the electrical cable 220, the at least one bridge element 185 is detached from the first side wall 128 and rotates together with the masking and guide body 180 for the electrical cable 220 towards the second side wall 129 of the support plate 110. During an initial step of the rotation of the support body 130 the masking and guide body 180 for the electrical cable 220 does not rotate until the electrical cable 220 abuts on the second rest portion 184. The masking and guide body 180 for the electrical cable 220, thus, rotates with a first angular delay with respect to the support body 130. During a terminal phase of the rotation of the support body 130 the masking and guide body 180 for the electrical cable 220 does not rotate as the at least one bridge element 185 is in abutment on the second side wall 129. The support body 130 keeps rotating until the protrusions 134, 135 reach the respective second endstroke abutments 121, 121' determining a second angular delay of the masking and guide body 180 for the electrical cable 220 with respect to the support body 130.

Preferably the first angular delay is comprised between 1° and 45°.

Preferably the second angular delay is comprised between 1° and 45°.

Preferably, the first angular delay is substantially equal to the second angular delay.

In the transition from the first stable opening position to the second stable closing position the electrical cable 220 is not subjected to the first angular excursion, but to a third angular excursion obtained by subtracting the first angular delay and the second angular delay from the first angular excursion.

Preferably, as observable in figure, the third angular excursion is 45 degrees.

When the hinge assembly for glasses 100 passes from the second stable closing position to the first stable opening position, the electrical cable 220 is drawn in rotation by the cover element 230 which leads it to detach from the second rest portion 184 until contacting the first rest portion 183. At this point, the electrical cable 220 draws in rotation the masking and guide body 180 for the electrical cable 220, the at least one bridge element 185 is detached from the second side wall 129 and rotates together with the masking and guide body 180 for the electrical cable 220 towards the first side wall 128 of the support plate 110.

During an initial phase of the rotation of the support body 130 the masking and guide body 180 for the electrical cable 220, thus, rotates with the second angular delay with respect to the support body 130. During a terminal phase of the rotation of the support body 130 the masking and guide body 180 for the electrical cable 220 does not rotate as the at least one bridge element 185 is in abutment on the first side wall 128 but the support body 130 keeps rotating until the protrusions 134, 135 reach the respective first endstroke abutments 120, 120' determining the first angular delay of the masking and guide body 180 for the electrical cable 220 with respect to the support body 130.

Thus, the distance between the side walls 128, 129 is such as to determine the first angular delay between the rotation of the support body 130 and the rotation of the masking and guide body 180 for the electrical cable 220 and the second angular delay between the rotation of the support body 130 and the rotation of the masking and guide body 180 for the electrical cable 220.

The features of the hinge assembly for glasses being object of the present invention are evident from the performed description, as well as the related advantages are evident.

Indeed, the hinge assembly for glasses according to the present invention is bistable and is simultaneously able to reach an extra-opening position.

Furthermore, in the case where the hinge assembly for glasses is mounted in "smart" type glasses, the angular delays provided between the rotations of the masking and guide body for an electrical cable and the support body allow to prevent the electrical cable from being subjected to critical bending which could damage the electrical cable itself.

Finally, it is evident that the hinge assembly for glasses thus conceived is susceptible to a number of modifications and variations, all being part of the invention; furthermore, all the details are replaceable by technically equivalent elements. In practice, the used materials, as well as the size, can be whatever depending on the technical requirements.

## Claims

1. Hinge assembly for glasses (100) comprising:
- a support plate (110) having a first face (111) substantially flat intended to be applied to a front (311) of a frame (310) for glasses (300), and a second face (112) substantially flat opposite and parallel to said first face (111), said support plate (110) comprising a first cantilevered portion (113) and a second cantilevered portion (114) parallel and opposite to each other extending from said second face (112) in a direction substantially perpendicular to it, said cantilevered portions (113, 114) respectively having a first through hole (115) and a second through hole (116) opposite and aligned with each other along a vertical direction z;
- a support body (130) intended to be applied to a temple (312) for glasses (300), said support body (130) being rotatably coupled to said support plate (110), said support body (130) and said support plate (110) comprising respective interaction elements (118, 119, 134, 135) adapted to guide the reciprocal rotation of said support body (130) and said support plate (110) between a first stable opening position of said hinge assembly for glasses (100) and/or a second stable closing position of said hinge assembly for glasses (100), said support body (130) comprising a third through hole (132) and a slotted through hole (133) having axes parallel to each other and substantially parallel to said vertical direction z, said support body (130) comprising at least one housing chamber (138) open toward the outside and in communication with said slotted through hole (133);
- a first arm element (140) and a second arm element (150) having respective first perforated end portions (141, 151) arranged respectively at said first through hole (115) and said second through hole (116) of said cantilevered portions (113, 114), and respective second perforated end portions (142, 152) housed in said support body (130) at said third through hole (132), a first coupling pin (136) crossing said third through hole (132) and said second perforated end portions (142, 152), a first coupling element (122) and a second coupling element (123) crossing at least partially respectively said first through hole (115) and said second through hole (116) and coupling respectively with said first perforated end portions (141, 151);
- a third arm element (160) and a fourth arm element (170) having respective third perforated end portions (161, 171) rotatably coupled respectively to said first perforated end portions (141, 151) and respective fourth perforated end portions (162, 172) housed in said support body (130) at said slotted through hole (133), a second coupling pin (137) crossing said slotted through hole (133) and said fourth perforated end portions (162, 172);
- at least one elastic element (139) housed in said at least one housing chamber (138) on one side, in contact with a bottom wall of said at least one housing chamber (138) on the other side, in contact with said second coupling pin (137), said at least one elastic element (139) being compressed by said second coupling pin (137) when the hinge assembly for glasses (100) passes from said first stable opening position to a third unstable extra-opening position, said at least one elastic element (139) pushing said second coupling pin (137) to return from the third unstable extra-opening position to the first stable opening position.

2. Hinge assembly for glasses (100) according to claim 1, wherein said interaction elements (118, 119, 134, 135) comprise:
- a first guide groove (118) made on said first cantilevered portion (113),
- a second guide groove (119) made on said second cantilevered portion (114),
- a first protrusion (134) and a second protrusion (135) made on said support body (130), said guide grooves (118, 119) describing an arc of circumference and comprising respectively a first endstroke abutment (120, 120') and a second endstroke abutment (121, 121'), said first protrusion (134) and said second protrusion (135) resting respectively in said first guide groove (118) and in said second guide groove (119) and being adapted to slide in them between the first endstroke abutment (120, 120') and the second endstroke abutment (121, 121'), said first protrusion (134) and said second protrusion (135) both being in contact and in abutment with said first endstroke abutments (120, 120') when said hinge assembly for glasses (100) is in the first stable opening position, said first protrusion (134) and said second protrusion (135) both being in contact and in abutment with said second endstroke abutments (121, 121') when said hinge assembly for glasses (100) is in the second stable closing position.

3. Hinge assembly for glasses (100), according to claim 1 or 2, wherein said first perforated end portions (141, 151) have around their hole cylindrical delimitation walls (143, 153) that protrude for a section of length beyond the surface of said portions respectively towards said first cantilevered portion (113) and said second cantilevered portion (114), said first coupling element (122) and said second coupling element (123) having corresponding threaded ends (124, 125) adapted to couple with the threaded holes of said first perforated end portions (141, 151), said first coupling element (122) and said second coupling element (123) having respective cylindrical portions (126, 127) adapted to allow the rotation of said coupling elements (122, 123) within said first through hole (115) and said second through hole (116).

4. Hinge assembly for glasses (100), according to one or more of the preceding claims, wherein said at least one elastic element (139) are two and in number equal to the number of said at least one housing chamber (138).

5. Hinge assembly for glasses (100), according to one or more of the preceding claims, comprising a masking and guide body (180) for an electrical cable (220) extending along the axis z between a first end (181) and a second end (182) and is interposed between said cantilevered portions (113, 114) in such a way that said first end (181) faces said first cantilevered portion (113) and said second end (182) faces said second cantilevered portion (114), said first perforated end portion (141) of said first arm element (140) is interposed between said first end (181) of the masking and guide body (180) for the electrical cable (220) and said first cantilevered portion (113), said first perforated end portion (151) of said second arm element (150) is interposed between said second end (182) of the masking and guide body (180) for the electrical cable (220) and said second cantilevered portion (114).

6. Hinge assembly for glasses (100), according to claim 5, wherein said masking and guide body (180) for the electrical cable (220) comprises a first rest portion (183) and a second rest portion (184) spaced from each other extending in length between the first end (181) and the second end (182) and at least one bridge element (185) connecting said rest portions (183, 184) to each other, said rest portions (183, 184) facing each other and defining a free gap between them, said support plate (110) comprising an opening (190) positioned along the vertical direction z between said first cantilevered portion (113) and said second cantilevered portion (114).

7. Hinge assembly for glasses (100), according to claim 6, wherein said first rest portion (183) and said second rest portion (184) have two perimeter stop walls (186, 187) that protrude along a direction substantially parallel to the vertical axis z beyond said first end (181) and said second end (182) making two housing seats for said first perforated end portions (141, 151).

8. Hinge assembly for glasses (100), according to claim 6 or 7, wherein said support plate (110) comprises a first side wall (128) and a second side wall (129) connecting said first cantilevered portion (113) to said second cantilevered portion (114), said at least one bridge element (185) is in contact and in abutment with said first side wall (128) of said support plate (110) when said hinge assembly for glasses (100) is in the first stable opening position, said at least one bridge element (185) is in contact and in abutment with said second side wall (129) of said support plate (110) when said hinge assembly for glasses (100) is in the second stable closing position.

9. Hinge assembly for glasses (100), according to claim 8 wherein the distance between said side walls (128, 129) is such as to determine a first angular delay between the rotation of said support body (130) and the rotation of said masking and guide body (180) for the electrical cable (220) and a second angular delay between the rotation of said support body (130) and the rotation of said masking and guide body (180) for the electrical cable (220).

10. Hinge assembly for glasses (100), according to claim 9 wherein said first angular delay is substantially equal to said second angular delay.

11. Hinge assembly for glasses (100), according to claim 9 or 10 wherein said first angular delay is comprised between 1° and 45° and said second angular delay is comprised between 1° and 45°.

12. Glasses (300) comprising:
- a front (311) adapted to carry two lenses and two temples (312), said temples (312) adapted to allow a user to wear glasses;
- two hinge assemblies for glasses (100) according to any of claims 1-11, each of which couples a respective temple (312) to said front (311).

13. Glasses (300) according to claim 12 wherein said glasses (300) are of the "smart" type and said hinge assembly for glasses (100) is made according to claims from 5 to 8, said glasses (300) comprising an electrical cable (220) adapted to electrically connect electrical and/or electronic devices between them that are installed in said front (311) and in said temples (312), said electrical cable (220) coming from said front (311) of said glasses (300) crossing said opening (190) of said support plate (110) and the gap between said rest portions (183, 184) reaching the respective temple (312).

## Patentansprüche

1. Scharnieranordnung für eine Brille (100), die Folgendes umfasst:
- eine Stützplatte (110) mit einer im Wesentlichen flachen ersten Fläche (111), die dazu bestimmt ist, an einer Vorderseite (311) eines Rahmens (310) für eine Brille (300) angebracht zu sein, und einer im Wesentlichen flachen zweiten Fläche (112) entgegengesetzt und parallel zu der ersten Fläche (111), wobei die Stützplatte (110) einen ersten freitragenden Abschnitt (113) und einen zweiten freitragenden Abschnitt (114) parallel und entgegengesetzt zueinander umfasst, die sich von der zweiten Fläche (112) in einer Richtung im Wesentlichen senkrecht zu dieser erstrecken, wobei die freitragenden Abschnitte (113, 114) jeweils ein erstes Durchgangsloch (115) und ein zweites Durchgangsloch (116) aufweisen, die entgegengesetzt und entlang einer vertikalen Richtung z miteinander ausgerichtet sind;
- einen Stützkörper (130), der dazu bestimmt ist, an einem Bügel (312) für eine Brille (300) angebracht zu sein, wobei der Stützkörper (130) drehbar mit der Stützplatte (110) gekoppelt ist, wobei der Stützkörper (130) und die Stützplatte (110) jeweilige Interaktionselemente (118, 119, 134, 135) umfassen, die dazu ausgelegt sind, die wechselseitige Drehung des Stützkörpers (130) und der Stützplatte (110) zwischen einer ersten stabilen Öffnungsposition der Scharnieranordnung für eine Brille (100) und/oder einer zweiten stabilen Schließposition der Scharnieranordnung für eine Brille (100) zu führen, wobei der Stützkörper (130) ein drittes Durchgangsloch (132) und ein geschlitztes Durchgangsloch (133) umfasst, die Achsen parallel zueinander und im Wesentlichen parallel zu der vertikalen Richtung z aufweisen, wobei der Stützkörper (130) mindestens eine Aufnahmekammer (138) umfasst, die zur Außenseite offen ist und mit dem geschlitzten Durchgangsloch (133) in Verbindung steht;
- ein erstes Armelement (140) und ein zweites Armelement (150) mit jeweiligen ersten perforierten Endabschnitten (141, 151), die jeweils an dem ersten Durchgangsloch (115) und dem zweiten Durchgangsloch (116) der freitragenden Abschnitte (113, 114) angeordnet sind, und jeweiligen zweiten perforierten Endabschnitten (142, 152), die in dem Stützkörper (130) an dem dritten Durchgangsloch (132) aufgenommen sind, wobei ein erster Kopplungsstift (136) das dritte Durchgangsloch (132) und die zweiten perforierten Endabschnitte (142, 152) durchquert, wobei ein erstes Kopplungselement (122) und ein zweites Kopplungselement (123) jeweils das erste Durchgangsloch (115) und das zweite Durchgangsloch (116) zumindest teilweise durchqueren und jeweils mit den ersten perforierten Endabschnitten (141, 151) gekoppelt sind;
- ein drittes Armelement (160) und ein viertes Armelement (170) mit jeweiligen dritten perforierten Endabschnitten (161, 171), die jeweils drehbar mit den ersten perforierten Endabschnitten (141, 151) gekoppelt sind, und jeweiligen vierten perforierten Endabschnitten (162, 172), die in dem Stützkörper (130) an dem geschlitzten Durchgangsloch (133) aufgenommen sind, wobei ein zweiter Kopplungsstift (137) das geschlitzte Durchgangsloch (133) und die vierten perforierten Endabschnitte (162, 172) durchquert;
- mindestens ein elastisches Element (139), das in der mindestens einen Aufnahmekammer (138) auf einer Seite aufgenommen ist, mit einer unteren Wand der mindestens einen Aufnahmekammer (138) auf der anderen Seite in Kontakt steht, mit dem zweiten Kopplungsstift (137) in Kontakt steht, wobei das mindestens eine elastische Element (139) durch den zweiten Kopplungsstift (137) zusammengedrückt wird, wenn die Scharnieranordnung für eine Brille (100) von der ersten stabilen Öffnungsposition in eine dritte instabile zusätzliche Öffnungsposition übergeht, wobei das mindestens eine elastische Element (139) so auf den zweiten Kopplungsstift (137) drückt, dass er von der dritten instabilen zusätzlichen Öffnungsposition in die erste stabile Öffnungsposition zurückkehrt.

2. Scharnieranordnung für eine Brille (100) nach Anspruch 1, wobei die Interaktionselemente (118, 119, 134, 135) Folgendes umfassen:
- eine erste Führungsnut (118), die an dem ersten freitragenden Abschnitt (113) gebildet ist,
- eine zweite Führungsnut (119), die an dem zweiten freitragenden Abschnitt (114) gebildet ist,
- einen ersten Vorsprung (134) und einen zweiten Vorsprung (135), die an dem Stützkörper (130) gebildet sind, wobei die Führungsnuten (118, 119) einen Umfangsbogen beschreiben und jeweils einen ersten Endhubanschlag (120, 120') und einen zweiten Endhubanschlag (121, 121') umfassen, wobei der erste Vorsprung (134) und der zweite Vorsprung (135) jeweils in der ersten Führungsnut (118) und in der zweiten Führungsnut (119) ruhen und dazu ausgelegt sind, in diesen zwischen dem ersten Endhubanschlag (120, 120') und dem zweiten Endhubanschlag (121, 121') zu gleiten, wobei der erste Vorsprung (134) und der zweite Vorsprung (135) beide in Kontakt und in Anlage mit den ersten Endhubanschlägen (120, 120') sind, wenn sich die Scharnieranordnung für eine Brille (100) in der ersten stabilen Öffnungsposition befindet, wobei der erste Vorsprung (134) und der zweite Vorsprung (135) beide in Kontakt und in Anlage mit den zweiten Endhubanschlägen (121, 121') sind, wenn sich die Scharnieranordnung für eine Brille (100) in der zweiten stabilen Schließposition befindet.

3. Scharnieranordnung für eine Brille (100) nach Anspruch 1 oder 2, wobei die ersten perforierten Endabschnitte (141, 151) um ihr Loch herum zylindrische Begrenzungswände (143, 153) aufweisen, die jeweils hin zu dem ersten freitragenden Abschnitt (113) und dem zweiten freitragenden Abschnitt (114) für einen Längenabschnitt über die Oberfläche der Abschnitte hinausragen, wobei das erste Kopplungselement (122) und das zweite Kopplungselement (123) entsprechende Gewindeenden (124, 125) aufweisen, die dazu ausgelegt sind, mit den Gewindelöchern der ersten perforierten Endabschnitte (141, 151) gekoppelt zu sein, wobei das erste Kopplungselement (122) und das zweite Kopplungselement (123) jeweilige zylindrische Abschnitte (126, 127) aufweisen, die dazu ausgelegt sind, die Drehung der Kopplungselemente (122, 123) innerhalb des ersten Durchgangslochs (115) und des zweiten Durchgangslochs (116) zu ermöglichen.

4. Scharnieranordnung für eine Brille (100) nach einem oder mehreren der vorhergehenden Ansprüche, wobei das mindestens eine elastische Element (139) zwei und in der Anzahl gleich der Anzahl der mindestens einen Aufnahmekammer (138) sind.

5. Scharnieranordnung für eine Brille (100) nach einem oder mehreren der vorhergehenden Ansprüche, die einen Abdeckungs- und Führungskörper (180) für ein elektrisches Kabel (220) umfasst, der sich entlang der Achse z zwischen einem ersten Ende (181) und einem zweiten Ende (182) erstreckt und zwischen den freitragenden Abschnitten (113, 114) derart angeordnet ist, dass das erste Ende (181) dem ersten freitragenden Abschnitt (113) zugewandt ist und das zweite Ende (182) dem zweiten freitragenden Abschnitt (114) zugewandt ist, wobei der erste perforierte Endabschnitt (141) des ersten Armelements (140) zwischen dem ersten Ende (181) des Abdeckungs- und Führungskörpers (180) für das elektrische Kabel (220) und dem ersten freitragenden Abschnitt (113) angeordnet ist, wobei der erste perforierte Endabschnitt (151) des zweiten Armelements (150) zwischen dem zweiten Ende (182) des Abdeckungs- und Führungskörpers (180) für das elektrische Kabel (220) und dem zweiten freitragenden Abschnitt (114) angeordnet ist.

6. Scharnieranordnung für eine Brille (100) nach Anspruch 5, wobei der Abdeckungs- und Führungskörper (180) für das elektrische Kabel (220) einen ersten Auflageabschnitt (183) und einen zweiten Auflageabschnitt (184), die voneinander beabstandet sind, die sich in der Länge zwischen dem ersten Ende (181) und dem zweiten Ende (182) erstrecken, und mindestens ein Brückenelement (185) umfasst, das die Auflageabschnitte (183, 184) miteinander verbindet, wobei die Auflageabschnitte (183, 184) einander zugewandt sind und einen freien Spalt dazwischen definieren, wobei die Stützplatte (110) eine Öffnung (190) umfasst, die entlang der vertikalen Richtung z zwischen dem ersten freitragenden Abschnitt (113) und dem zweiten freitragenden Abschnitt (114) positioniert ist.

7. Scharnieranordnung für eine Brille (100) nach Anspruch 6, wobei der erste Auflageabschnitt (183) und der zweite Auflageabschnitt (184) zwei Umfangsanschlagwände (186, 187) aufweisen, die entlang einer Richtung im Wesentlichen parallel zu der vertikalen Achse z über das erste Ende (181) und das zweite Ende (182) hinausragen, wobei sie zwei Aufnahmesitze für die ersten perforierten Endabschnitte (141, 151) bilden.

8. Scharnieranordnung für eine Brille (100) nach Anspruch 6 oder 7, wobei die Stützplatte (110) eine erste Seitenwand (128) und eine zweite Seitenwand (129) umfasst, die den ersten freitragenden Abschnitt (113) mit dem zweiten freitragenden Abschnitt (114) verbinden, wobei das mindestens eine Brückenelement (185) in Kontakt und in Anlage mit der ersten Seitenwand (128) der Stützplatte (110) steht, wenn sich die Scharnieranordnung für eine Brille (100) in der ersten stabilen Öffnungsposition befindet, wobei das mindestens eine Brückenelement (185) in Kontakt und in Anlage mit der zweiten Seitenwand (129) der Stützplatte (110) steht, wenn sich die Scharnieranordnung für eine Brille (100) in der zweiten stabilen Schließposition befindet.

9. Scharnieranordnung für eine Brille (100) nach Anspruch 8, wobei der Abstand zwischen den Seitenwänden (128, 129) derart ist, dass eine erste Winkelverzögerung zwischen der Drehung des Stützkörpers (130) und der Drehung des Abdeckungs- und Führungskörpers (180) für das elektrische Kabel (220) und eine zweite Winkelverzögerung zwischen der Drehung des Stützkörpers (130) und der Drehung des Abdeckungs- und Führungskörpers (180) für das elektrische Kabel (220) bestimmt ist.

10. Scharnieranordnung für eine Brille (100) nach Anspruch 9, wobei die erste Winkelverzögerung im Wesentlichen gleich der zweiten Winkelverzögerung ist.

11. Scharnieranordnung für eine Brille (100) nach Anspruch 9 oder 10, wobei die erste Winkelverzögerung zwischen 1° und 45° beträgt und die zweite Winkelverzögerung zwischen 1° und 45° beträgt.

12. Brille (300), die Folgendes umfasst:
- eine Vorderseite (311), die dazu ausgelegt ist, zwei Linsen und zwei Bügel (312) zu tragen, wobei die Bügel (312) dazu ausgelegt sind, einem Benutzer zu ermöglichen, die Brille zu tragen;
- zwei Scharnieranordnungen für eine Brille (100) nach einem der Ansprüche 1-11, von denen jede einen jeweiligen Bügel (312) mit der Vorderseite (311) koppelt.

13. Brille (300) nach Anspruch 12, wobei die Brille (300) vom "intelligenten" Typ ist und die Scharnieranordnung für eine Brille (100) nach den Ansprüchen 5 bis 8 gebildet ist, wobei die Brille (300) ein elektrisches Kabel (220) umfasst, das dazu ausgelegt ist, elektrische und/oder elektronische Vorrichtungen dazwischen elektrisch zu verbinden, die in der Vorderseite (311) und in den Bügeln (312) installiert sind, wobei das elektrische Kabel (220) von der Vorderseite (311) der Brille (300) kommt, wobei es die Öffnung (190) der Stützplatte (110) und den Spalt zwischen den Auflageabschnitten (183, 184) durchquert, so dass es den jeweiligen Bügel (312) erreicht.

## Revendications

1. Ensemble charnière pour lunettes (100), comprenant:
- une plaque de support (110) ayant une première face (111) sensiblement plate prévue pour être appliquée sur un devant (311) d'une monture (310) pour lunettes (300), et une seconde face (112) sensiblement plate opposée et parallèle à ladite première face (111), ladite plaque de support (110) comprenant une première partie en porte-à-faux (113) et une seconde partie en porte-à-faux (114) parallèles et opposées l'une à l'autre s'étendant depuis ladite seconde face (112) dans une direction sensiblement perpendiculaire à celle-ci, lesdites parties en porte-à-faux (113, 114) ayant respectivement un premier trou de passage (115) et un deuxième trou de passage (116) opposés et alignés l'un avec l'autre le long d'une direction verticale z;
- un corps de support (130) prévu pour être appliqué sur une branche (312) pour des lunettes (300), ledit corps de support (130) étant couplé de façon rotative à ladite plaque de support (110), ledit corps de support (130) et ladite plaque de support (110) comprenant des éléments d'interaction respectifs (118, 119, 134, 135) adaptés pour guider la rotation réciproque dudit corps de support (130) et de ladite plaque de support (110) entre une première position d'ouverture stable dudit ensemble charnière pour lunettes (100) et/ou une deuxième position de fermeture stable dudit ensemble charnière pour lunettes (100), ledit corps de support (130) comprenant un troisième trou de passage (132) et un trou de passage rainuré (133) ayant des axes parallèles l'un à l'autre et sensiblement parallèles à ladite direction verticale z, ledit corps de support (130) comprenant au moins une chambre de logement (138) ouverte vers l'extérieur et en communication avec ledit trou de passage rainuré (133);
- un premier élément bras (140) et un deuxième élément bras (150) ayant des premières parties d'extrémité perforées respectives (141, 151) agencées respectivement au niveau dudit premier trou de passage (115) et dudit deuxième trou de passage (116) desdites parties en porte-à-faux (113, 114), et des deuxièmes parties d'extrémité perforées respectives (142, 152) logées dans ledit corps de support (130) au niveau dudit troisième trou de passage (132), une première goupille de couplage (136) croisant ledit troisième trou de passage (132) et lesdites deuxièmes parties d'extrémité perforées (142, 152), un premier élément de couplage (122) et un second élément de couplage (123) croisant au moins partiellement respectivement ledit premier trou de passage (115) et ledit deuxième trou de passage (116) et se couplant respectivement auxdites premières parties d'extrémité perforées (141, 151);
- un troisième élément bras (160) et un quatrième élément bras (170) ayant des troisièmes parties d'extrémité perforées respectives (161, 171) couplées de façon rotative respectivement auxdites premières parties d'extrémité perforées (141, 151) et des quatrièmes parties d'extrémité perforées respectives (162, 172) logées dans ledit corps de support (130) au niveau dudit trou de passage rainuré (133), une seconde goupille de couplage (137) croisant ledit trou de passage rainuré (133) et lesdites quatrièmes parties d'extrémité perforées (162, 172);
- au moins un élément élastique (139) logé dans ladite au moins une chambre de logement (138) sur un côté, en contact avec une paroi inférieure de ladite au moins une chambre de logement (138) sur l'autre côté, en contact avec ladite seconde goupille de couplage (137), ledit au moins un élément élastique (139) étant comprimé par ladite seconde goupille de couplage (137) lorsque l'ensemble charnière pour lunettes (100) passe de ladite première position d'ouverture stable à une troisième position d'ouverture supplémentaire instable, ledit au moins un élément élastique (139) poussant ladite seconde goupille de couplage (137) à retourner de la troisième position d'ouverture supplémentaire instable à la première position d'ouverture stable.

2. Ensemble charnière pour lunettes (100) selon la revendication 1, dans lequel lesdits éléments d'interaction (118, 119, 134, 135) comprennent:
- une première rainure de guidage (118) faite sur ladite première partie en porte-à-faux (113),
- une seconde rainure de guidage (119) faite sur ladite seconde partie en porte-à-faux (114),
- une première saillie (134) et une seconde saillie (135) faites sur ledit corps de support (130), lesdites rainures de guidage (118, 119) décrivant un arc de circonférence et comprenant respectivement une première butée de fin de course (120, 120') et une seconde butée de fin de course (121, 121'), ladite première saillie (134) et ladite seconde saillie (135) reposant respectivement dans ladite première rainure de guidage (118) et dans ladite seconde rainure de guidage (119) et étant adaptées pour coulisser dans celles-ci entre la première butée de fin de course (120, 120') et la seconde butée de fin de course (121, 121'), ladite première saillie (134) et ladite seconde saillie (135) étant toutes les deux en contact et en butée avec ladite première butée de fin de courses (120, 120') lorsque ledit ensemble charnière pour lunettes (100) est dans la première position d'ouverture stable, ladite première saillie (134) et ladite seconde saillie (135) étant toutes les deux en contact et en butée avec ladite seconde butée de fin de courses (121, 121') lorsque ledit ensemble charnière pour lunettes (100) est dans la deuxième position de fermeture stable.

3. Ensemble charnière pour lunettes (100) selon la revendication 1 ou 2, dans lequel lesdites premières parties d'extrémité perforées (141, 151) ont, autour de leur trou, des parois de délimitation cylindriques (143, 153) qui font saillie sur une section de longueur au-delà de la surface desdites parties respectivement vers ladite première partie en porte-à-faux (113) et ladite seconde partie en porte-à-faux (114), ledit premier élément de couplage (122) et ledit second élément de couplage (123) ayant des extrémités filetées correspondantes (124, 125) adaptées pour se coupler aux trous filetés desdites premières parties d'extrémité perforées (141, 151), ledit premier élément de couplage (122) et ledit second élément de couplage (123) ayant des parties cylindriques respectives (126, 127) adaptées pour permettre la rotation desdits éléments de couplage (122, 123) à l'intérieur dudit premier trou de passage (115) et dudit deuxième trou de passage (116).

4. Ensemble charnière pour lunettes (100) selon une ou plusieurs des revendications précédentes, dans lequel ledit au moins un élément élastique (139) est au nombre de deux et en nombre égal au nombre de ladite au moins une chambre de logement (138).

5. Ensemble charnière pour lunettes (100) selon une ou plusieurs des revendications précédentes, comprenant un corps de masquage et de guidage (180) pour un câble électrique (220) s'étendant le long de l'axe z entre une première extrémité (181) et une seconde extrémité (182) et est interposé entre lesdites parties en porte-à-faux (113, 114) de manière telle que ladite première extrémité (181) fait face à ladite première partie en porte-à-faux (113) et ladite seconde extrémité (182) fait face à ladite seconde partie en porte-à-faux (114), ladite première partie d'extrémité perforée (141) dudit premier élément bras (140) est interposée entre ladite première extrémité (181) du corps de masquage et de guidage (180) pour le câble électrique (220) et ladite première partie en porte-à-faux (113), ladite première partie d'extrémité perforée (151) dudit deuxième élément bras (150) est interposée entre ladite seconde extrémité (182) du corps de masquage et de guidage (180) pour le câble électrique (220) et ladite seconde partie en porte-à-faux (114).

6. Ensemble charnière pour lunettes (100) selon la revendication 5, dans lequel ledit corps de masquage et de guidage (180) pour le câble électrique (220) comprend une première partie de repos (183) et une seconde partie de repos (184) espacées l'une de l'autre s'étendant en longueur entre la première extrémité (181) et la seconde extrémité (182) et au moins un élément pont (185) raccordant lesdites parties de repos (183, 184) l'une à l'autre, lesdites parties de repos (183, 184) faisant face l'une à l'autre et définissant un espace libre entre celles-ci, ladite plaque de support (110) comprenant une ouverture (190) positionnée le long de la direction verticale z entre ladite première partie en porte-à-faux (113) et ladite seconde partie en porte-à-faux (114).

7. Ensemble charnière pour lunettes (100), selon la revendication 6, dans lequel ladite première partie de repos (183) et ladite seconde partie de repos (184) ont deux parois d'arrêt périmétriques (186, 187) qui font saillie le long de a direction sensiblement parallèle à l'axe vertical z au-delà de ladite première extrémité (181) et de ladite seconde extrémité (182) composant deux sièges de logement pour lesdites premières parties d'extrémité perforées (141, 151).

8. Ensemble charnière pour lunettes (100), selon la revendication 6 ou 7, dans lequel ladite plaque de support (110) comprend une première paroi latérale (128) et une seconde paroi latérale (129) raccordant ladite première partie en porte-à-faux (113) à ladite seconde partie en porte-à-faux (114), ledit au moins un élément pont (185) est en contact et en butée avec ladite première paroi latérale (128) de ladite plaque de support (110) lorsque ledit ensemble charnière pour lunettes (100) est dans la première position d'ouverture stable, ledit au moins un élément pont (185) est en contact et en butée avec ladite seconde paroi latérale (129) de ladite plaque de support (110) lorsque ledit ensemble charnière pour lunettes (100) est dans la deuxième position de fermeture stable.

9. Ensemble charnière pour lunettes (100) selon la revendication 8, dans lequel la distance entre lesdites parois latérales (128, 129) est telle à déterminer un premier retard angulaire entre la rotation dudit corps de support (130) et la rotation dudit corps de masquage et de guidage (180) pour le câble électrique (220) et un second retard angulaire entre la rotation dudit corps de support (130) et la rotation dudit corps de masquage et de guidage (180) pour le câble électrique (220).

10. Ensemble charnière pour lunettes (100) selon la revendication 9, dans lequel ledit premier retard angulaire est sensiblement égal audit second retard angulaire.

11. Ensemble charnière pour lunettes (100) selon la revendication 9 ou 10, dans lequel ledit premier retard angulaire est compris entre 1° et 45° et ledit second retard angulaire est compris entre 1° et 45°.

12. Lunettes (300), comprenant:
- un devant (311) adapté pour supporter deux verres et deux branches (312), lesdites branches (312) étant adaptées pour permettre à un utilisateur de porter des lunettes;
- deux ensembles charnières pour lunettes (100) selon de quelconques des revendications 1 à 11, dont chacun couple une branche respective (312) audit devant (311).

13. Lunettes (300) selon la revendication 12, dans lesquelles lesdites lunettes (300) sont du type « intelligent » et ledit ensemble charnière pour lunettes (100) est fait selon les revendications 5 à 8, lesdites lunettes (300) comprenant un câble électrique (220) adapté pour raccorder électriquement des dispositifs électriques et/ou électroniques entre celles-ci, qui sont installés dans ledit devant (311) et dans lesdites branches (312), ledit câble électrique (220) provenant dudit devant (311) desdites lunettes (300) croisant ladite ouverture (190) de ladite plaque de support (110) et l'espace entre lesdites parties de repos (183, 184) atteignant la branche respective (312).
